# EUROPEAN PATENT APPLICATION

(11) **EP 4 742 593 A1**
(43) Date of publication of application: **13.05.2026**
(21) Application number: 24848046.9
(22) Date of filing: 19.07.2024
(51) Int. Cl.: H04L 9/40

(54) **CROSS-ACCOUNT RESOURCE CALLING METHOD BASED ON CLOUD COMPUTING TECHNOLOGY, AND RELATED DEVICE**

(30) Priority: 31.07.2023 CN 202310952497; 11.12.2023 CN 202311697137
(71) Applicant: Huawei Cloud Computing Technologies Co., Ltd., Guiyang, Guizhou, 550025 (CN)
(72) Inventor: ZHAI, Honggang, Guiyang, Guizhou 550025 (CN)
(74) Representative: Pfenning, Meinig & Partner mbB
(86) International application number: PCT/CN2024/106441
(87) International publication number: WO 2025/026087

(57) **Abstract**

This application provides a cross-account resource invoking method based on a cloud computing technology and a related device. The method is applied to a cloud management system. The cloud management system is configured to manage an infrastructure on which a first service of a first tenant and a second service of a second tenant are configured. The cloud management system obtains an authorization request of the first tenant. The authorization request includes a tenant identifier of the second tenant, an authorization name, and a specific permission for the second service to invoke the first service. The cloud management system creates the specific permission based on the authorization request. The cloud management system obtains a permission obtaining request that is inputted by the second tenant and that includes the authorization name and a tenant identifier of the first tenant, and configures, based on the permission obtaining request, the second tenant to obtain the specific permission. The cloud management system allows, based on the specific permission when the second tenant configures the second service to invoke the first service, the second service to invoke the first service. In this way, a security degree of service scheduling in a cross-service and cross-account scenario can be improved, and efficiency of permission configuration and resource utilization can be improved.

## Description

This application claims priorities to Chinese Patent Application No. 202310952497.6, filed with the China National Intellectual Property Administration on July 31, 2023 and entitled "CROSS-ACCOUNT MULTI-SERVICE INTEGRATION METHOD", and to Chinese Patent Application No. 202311697137.2, filed with the China National Intellectual Property Administration on December 11, 2023 and entitled "CROSS-ACCOUNT RESOURCE INVOKING METHOD BASED ON CLOUD COMPUTING TECHNOLOGY AND RELATED DEVICE", both of which are incorporated herein by reference in their entireties.

### TECHNICAL FIELD

This application relates to the field of cloud service technologies, and in particular, to a cross-account resource invoking method based on a cloud computing technology and a related device.

### BACKGROUND

In a cloud serving (Cloud Serving) scenario, some cloud service platforms provide resource sharing services of a specific type. If other services need to use the resources of this type during work processing, the resources of this type are invoked in a cross-service manner. For example, a big data service can use, in a cross-service manner, container cluster resources provided by a container service. In this way, a plurality of services can fully use, in a time division multiplexing manner, the resources of the specific type provided by the cloud service platform.

Users who use cloud services manage and use resources by using accounts. The accounts are independent of each other. Resources possessed by different accounts are isolated from each other. If a user needs to use resources of another account in a cross-account manner, authorization from the another account is needed.

Currently, in a cross-service and cross-account service resource invoking scenario, an authorizing account provides, for an authorized account, credential information needed for logging in to the authorizing account, for example, account and password, certificate, and token. The authorized account uses the credential information to invoke resources in an identity of the authorizing account. However, providing credential information of a current account for another account poses security risks, and a security problem like abuse of the credential information by the another account may occur.

### SUMMARY

This application provides a cross-account resource invoking method based on a cloud computing technology and a related device, to implement, by using an authorization name and a tenant identifier of a first tenant, highly secure authorization of a cross-account and cross-service resource usage permission, and meet a requirement of using a service resource in a cross-service and cross-account scenario.

According to a first aspect, this application provides a cross-account resource invoking method based on a cloud computing technology. The method is applied to a cloud management system. The cloud management system is configured to manage an infrastructure. A first service of a first tenant and a second service of a second tenant are configured on the infrastructure. The cloud management system obtains an authorization request inputted by the first tenant. The authorization request includes a tenant identifier of the second tenant, an authorization name, and a specific permission for the second service to invoke the first service. The cloud management system creates the specific permission based on the obtained authorization request. The cloud management system obtains a permission obtaining request that is inputted by the second tenant and that includes the authorization name and a tenant identifier of the first tenant, and configures, based on the permission obtaining request, the second tenant to obtain the specific permission. In this way, a cross-service permission can be obtained by using the tenant identifier of the first tenant and the authorization name, and the first tenant does not need to externally disclose credential information such as account and password, certificate, and token of the first tenant. This improves security of cross-account and cross-service service invoking. The cloud management system allows, based on the specific permission when the second tenant configures the second service to invoke the first service, the second service to invoke the first service. While secure cross-service and cross-account service invoking is implemented, cross-service and cross-account service configuration is facilitated and service utilization is improved.

In a possible implementation, the second tenant includes at least one user. After obtaining the permission obtaining request, the cloud management system configures the second service to create at least one second sub-service corresponding to the at least one user, and configures the first service to create at least one first sub-service corresponding to the at least one user. When the user configures the second service to invoke the first service, the cloud management system allows the at least one second sub-service to invoke the at least one corresponding first sub-service, so that the second sub-service corresponding to the user can invoke the first sub-service corresponding to the user. In this way, authorization of a specific permission in a user dimension can be implemented, and that the user included in the tenant abuses a permission and consequently configures to invoke a first sub-service corresponding to another user is avoided, thereby effectively avoiding a security problem caused by the permission abuse.

In a possible implementation, the first service is a container service.

In a possible implementation, the specific permission includes a container resource permission. The container resource permission corresponds to a container user. The container resource permission is a permission to use an indicated container resource. In this way, the second tenant can invoke the container service.

In a possible implementation, the permission obtaining request inputted by the second tenant further includes credential information of the second tenant. The second tenant is configured, based on the credential information, to perform identity switching to the first tenant, to cause the second tenant to obtain the specific permission. In this way, an identity of a second user can be verified based on the credential information of the second tenant, and a security degree of cross-account and cross-service invoking of a service resource of the first service can be improved.

According to a second aspect, this application provides a cross-account resource invoking apparatus based on a cloud computing technology. The apparatus is used in a cloud management system, the cloud management system is configured to manage an infrastructure, a first service of a first tenant and a second service of a second tenant are configured on the infrastructure, and the apparatus includes:
a first obtaining module, configured to obtain an authorization request inputted by the first tenant, where the authorization request includes a tenant identifier of the second tenant, an authorization name, and a specific permission for the second service to invoke the first service;
a creation module, configured to create the specific permission based on the authorization request;
a second obtaining module, configured to obtain a permission obtaining request inputted by the second tenant, where the permission obtaining request includes the authorization name and a tenant identifier of the first tenant;
a first configuration module, configured to configure, based on the permission obtaining request, the second tenant to obtain the specific permission; and
a second configuration module, configured to allow, based on the specific permission when the second tenant configures the second service to invoke the first service, the second service to invoke the first service.

In a possible implementation, the second tenant includes at least one user, and the apparatus further includes:
a third configuration module, configured to: configure, based on the permission obtaining request, the second service to create at least one second sub-service corresponding to the at least one user, and configure the first service to create at least one first sub-service corresponding to the at least one user.

The second configuration module is specifically configured to allow, based on the specific permission when the at least one user configures the second service to invoke the first service, the at least one second sub-service to invoke the at least one corresponding first sub-service.

In a possible implementation, the first service is a container service.

In a possible implementation, the specific permission includes a container resource permission, the container resource permission corresponds to a container user, and the container resource permission is a permission to use a container resource.

In a possible implementation, the permission obtaining request includes credential information of the second tenant, and the first configuration module is specifically configured to configure, based on the credential information, the second tenant to perform identity switching to the first tenant, to cause the second tenant to obtain the specific permission.

According to a third aspect, this application provides a computing device cluster, including at least one computing device. Each computing device includes a processor and a memory. The memory is configured to store instructions. When the computing device cluster runs, the processor in each computing device executes the instructions stored in the memory, to enable the computing device cluster to perform the cross-account resource invoking method based on the cloud computing technology according to the first aspect or any possible implementation of the first aspect. It should be noted that the memory may be integrated into the processor, or may be independent of the processor. Each computing device may further include a bus. The processor is connected to the memory through the bus. The memory may include a readable memory and a random access memory.

According to a fourth aspect, this application provides a computer-readable storage medium, where the computer-readable storage medium stores instructions. When the instructions are run on a computing device cluster (where the computing device cluster includes at least one computing device), the computing device cluster is enabled to perform the cross-account resource invoking method based on the cloud computing technology according to the first aspect or any possible implementation of the first aspect.

According to a fifth aspect, this application provides a computer program product including instructions. When the instructions are run on a computing device cluster (where the computing device cluster includes at least one computing device), the computing device cluster is enabled to perform the cross-account resource invoking method based on the cloud computing technology according to the first aspect or any possible implementation of the first aspect.

In this application, based on the implementations provided in the foregoing aspects, the implementations may be further combined to provide more implementations.

### BRIEF DESCRIPTION OF DRAWINGS

FIG. 1 is a diagram of a scenario according to an embodiment of this application;
FIG. 2 is a diagram of an application scenario according to an embodiment of this application;
FIG. 3 is a schematic flowchart of a cross-account resource invoking method based on a cloud computing technology according to an embodiment of this application;
FIG. 4 is a schematic flowchart of another cross-account resource invoking method based on a cloud computing technology according to an embodiment of this application;
FIG. 5 is a diagram of a cross-account resource invoking method based on a cloud computing technology according to an embodiment of this application;
FIG. 6 is a diagram of a structure of a cross-account resource invoking apparatus based on a cloud computing technology according to an embodiment of this application;
FIG. 7 is a diagram of a structure of a computing device according to an embodiment of this application;
FIG. 8 is a diagram of a structure of a computing device cluster according to an embodiment of this application; and
FIG. 9 is a diagram of a structure of another computing device cluster according to an embodiment of this application.

### DESCRIPTION OF EMBODIMENTS

The following describes the solutions in embodiments provided in this application with reference to the accompanying drawings in this application.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application.

First, some technical terms in embodiments of this application are described.

A cloud service is an internet service that is provided for users by a large-scale server cluster that uses cloud computing technologies, and the service does not need to be downloaded and installed, can be used immediately upon going online, is easy to operate, has rich functions, and is inexpensive. In addition, the cloud service can provide computing resources and capabilities on demand, and has high resource utilization. Cloud services may include different types such as cloud host services and cloud storage services.

A cloud management system is configured to manage cloud computing infrastructures.

A container is a running instance created by using a Docker image. A plurality of containers can run on one node. The container is essentially a process. However, different from a process that is directly executed on a host, the container process runs in its own independent namespace.

MapReduce services (MapReduce Services) build a highly reliable, highly secure, and easy-to-use operation and maintenance platform, and externally provide large-capacity data storage and analysis capabilities, to meet data storage and processing requirements of enterprises. Users can independently apply for and use managed Hadoop, Spark, HBase, and Hive services, to quickly create clusters on hosts and provide batch data storage and computing capabilities for massive data that has low requirements on real-time processing.

A cloud container engine (Cloud Container Engine, CCE) is configured to provide enterprise-level container application management services with high reliability and high performance. The CCE supports native applications and tools from a Kubernetes community, and simplifies automated setup of a container running environment on the cloud.

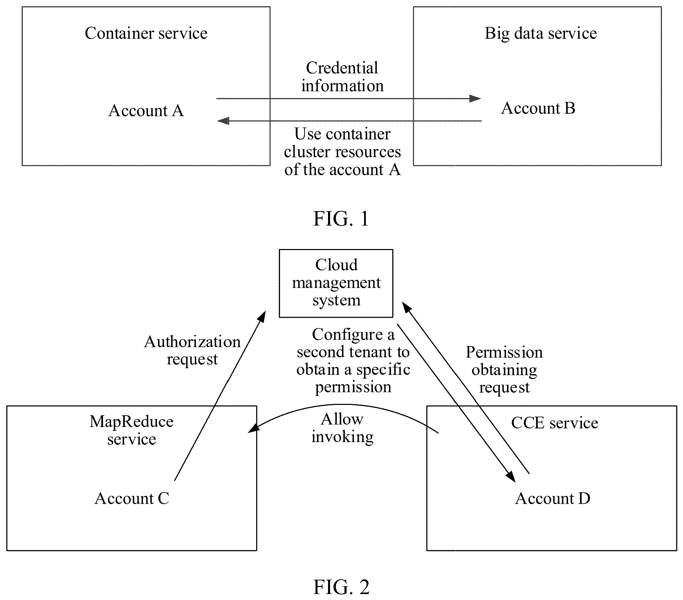

In a process in which users use the cloud services to process work, cross-service and cross-account resource invoking is involved. A big data service and a container service are used as an example. FIG. 1 is a diagram of a scenario according to an embodiment of this application. An account B for the big data service needs to obtain container cluster resources from the container service. An account A for the container service authorizes the account B for the big data service, and provides, for the account B for the big data service, credential information such as a security access key (Secret Access Key, SK), an account key (Account Key, AK), a token (token), or a certificate of the account A. The account B uses container cluster resources of the account A in the container service by using the credential information of the account A.

However, transferring credential information of an account has a high security risk. For example, the account B may abuse the credential information of the account A. For example, the account B uses resources of the account A beyond an authorization permission. In addition, it is difficult to control a validity period of the credential information of the account A. The account B may continue to use the credential information of the account A to invoke resources without authorization before the credential information of the account A becomes invalid.

In view of this, embodiments of this application provide a cross-account resource invoking method based on a cloud computing technology. The method is applied to a cloud management system, the cloud management system is configured to manage an infrastructure, and a first service of a first tenant and a second service of a second tenant are configured on the infrastructure. The cloud management system obtains an authorization request of the first tenant. The authorization request includes a tenant identifier of the second tenant, an authorization name, and a specific permission for the second service to invoke the first service. The cloud management system creates the specific permission based on the authorization request. The cloud management system obtains a permission obtaining request that is inputted by the second tenant and that includes the authorization name and a tenant identifier of the first tenant, and configures, based on the permission obtaining request, the second tenant to obtain the specific permission. The cloud management system allows, based on the specific permission when the second tenant configures the second service to invoke the first service, the second service to invoke the first service. In this way, resource invoking is implemented without credential information of a service account of the first tenant, highly secure authorization in a cross-service and cross-account scenario can be implemented, efficiency of permission configuration in the cross-service and cross-account scenario can be improved, and service resource utilization can be improved.

An application scenario of the cross-account resource invoking method based on the cloud computing technology is not limited in embodiments of this application. In some examples, FIG. 2 is a diagram of an application scenario according to an embodiment of this application. The cross-account resource invoking method based on the cloud computing technology provided in embodiments of this application can be applied to a cloud management system. The cloud management system is configured to manage an infrastructure. A MapReduce service and a CCE service are configured on the infrastructure. The cloud management system obtains an authorization request sent by a first tenant of the CCE service, to be specific, an authorization request sent by the first tenant by using an account C. The authorization request includes a tenant identifier (an account D) of a second tenant of the MapReduce service, an authorization name, and a specific permission for the MapReduce service to invoke the CCE service. The cloud management system creates the specific permission based on the authorization request. The cloud management system obtains a permission obtaining request inputted by the second tenant. The permission obtaining request includes the authorization name and a tenant identifier of the first tenant, that is, the account C. The cloud management system configures, based on the permission obtaining request, the second tenant to obtain the specific permission. When the second tenant configures the MapReduce service to invoke the CCE service, the cloud management system allows, based on the specific permission, the MapReduce service to invoke the CCE service.

It should be noted that the application scenario shown in FIG. 2 is merely an example. The cross-account resource invoking method based on the cloud computing technology provided in this application can be applied to another cross-service and cross-account service resource invoking scenario. An application scenario of the cross-account resource invoking method based on the cloud computing technology provided in embodiments of this application is not limited to the application scenario shown in FIG. 2.

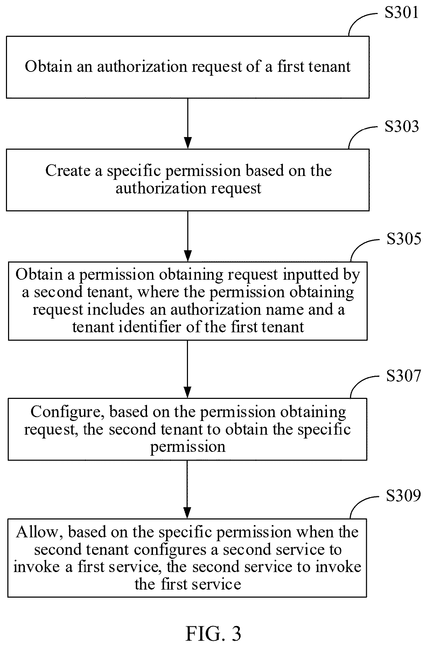

The following describes in detail various non-limiting specific implementations of the cross-account resource invoking method based on the cloud computing technology provided in this application. FIG. 3 is a schematic flowchart of a cross-account resource invoking method based on a cloud computing technology according to an embodiment of this application. The method can be applied to, for example, the cloud management system in the scenario shown in FIG. 2. The method includes S301 to S309.

S301: Obtain an authorization request of a first tenant.

The first tenant is a tenant of a first service. The first tenant has a permission to invoke a service resource of the first service. The first tenant can trigger an authorization request for a second tenant.

The authorization request includes a tenant identifier of the second tenant, an authorization name, and a specific permission for a second service to invoke the first service. The second tenant is a tenant of the second service. The tenant identifier of the second tenant is, for example, a tenant account identifier of the second tenant. A tenant identifier of the first tenant is different from the tenant identifier of the second tenant. The authorization name is used to identify the specific permission.

In some possible implementations, the specific permission authorized by the first tenant to the second tenant does not exceed the permission for the first tenant to use the service resource of the first service.

In an example, for example, in the application scenario shown in FIG. 2, the first service is a container service. A specific type of a service resource of the container service is not limited in this embodiment of this application. For example, the container service is a Kubernetes service.

In a possible implementation, the specific permission includes a container resource permission. The container resource permission is a permission for the second tenant to use a container resource.

In an example, the container resource permission can be authorized by an administrator of the container service to a container user. The specific permission corresponds to the container user. The Kubernetes service is used as an example. The container resource permission can be a permission that is created by an administrator of Kubernetes for the container user based on role-based access control (Role-Based Access Control, RBAC) and that corresponds to the container user. The container resource permission is, for example, an access permission for global namespace or an access permission for specified namespace. In this way, the second tenant can configure, based on the container resource permission, the second service to invoke the container service.

S303: Create the specific permission based on the authorization request.

The specific permission is created based on the obtained authorization request. The created specific permission is a permission for the second service to invoke the first service. In a possible implementation, delegation is created based on the authorization request. The delegation is a set of permissions, including the specific permission.

S305: Obtain a permission obtaining request inputted by the second tenant, where the permission obtaining request includes the authorization name and the tenant identifier of the first tenant.

The permission obtaining request of the second tenant is used to trigger configuration of the second tenant to obtain the specific permission. The second tenant generates the permission obtaining request by inputting the tenant identifier of the first tenant and the authorization name. For example, the second tenant inputs the tenant identifier of the first tenant and the authorization name through a console (Console User Interface, Console UI) or an application programming interface (Application Programming Interface, API), to trigger generation of the permission obtaining request.

The permission obtaining request includes the tenant identifier of the first tenant and the authorization name. The tenant identifier of the first tenant is, for example, an account identifier of the first tenant. The authorization name is used to identify the specific permission. In an example, the created specific permission is delegation. The authorization name is a delegation name.

The first service is invoked based on the tenant identifier of the first tenant by using an identity of the tenant identifier of the first tenant. The specific permission can be determined based on the authorization name, so that the first service can be invoked within a permission range of the specific permission.

In a possible implementation, the specific permission is obtained through query by using the authorization name. For example, the cloud management system creates a plurality of pieces of delegation, and queries delegation corresponding to the delegation name by using the authorization name, namely, the delegation name, included in the permission obtaining request.

S307: Configure, based on the permission obtaining request, the second tenant to obtain the specific permission.

The specific permission identified by the authorization name and the tenant identifier of the first tenant can be determined by using the permission obtaining request. The specific permission is configured for the second tenant, so that the second tenant configures, by using the specific permission, the second service to invoke the first service, to implement authorization of the specific permission.

It should be noted that in a possible implementation, the permission obtaining request further includes credential information of the second tenant. An identity of the second tenant can be verified by using the credential information of the second tenant. The second tenant is configured, based on the credential information of the second tenant, to perform identity switching to the first tenant, to cause the second tenant to obtain the specific permission. An identity switching manner is not limited in this embodiment of this application. In an example, the identity of the second tenant is switched based on an identity and access management (Identity and Access Management, IAM) service. In this way, the second tenant can obtain the specific permission based on the credential information of the second tenant, thereby improving a security degree of cross-service and cross-account service resource invoking.

S309: Allow, based on the specific permission when the second tenant configures the second service to invoke the first service, the second service to invoke the first service.

For the second tenant that obtains the specific permission, when the second service is configured to invoke the first service, the cloud management system allows the second service to invoke the first service. It should be noted that a permission range within which the second tenant configures the second service to invoke the first service falls within the permission range of the specific permission.

A trigger manner in which the second tenant configures the second service to invoke the first service is not limited in this embodiment of this application. In an example, in a process of processing work of the second tenant by using the second service, when that the service resource of the first service needs to be used is detected, configuring the second service to invoke the first service is automatically triggered. In another example, a configuration request triggered by the second tenant for configuring the second service to invoke the first service is obtained. The second service is configured, based on the configuration request, to invoke the first service.

It can be learned from related content in S301 to S309 that, by using the tenant identifier of the second tenant, the authorization name, and the specific permission, the specific permission configured for the second tenant can be created, and cross-account and cross-service authorization can be implemented. After obtaining the specific permission based on the permission obtaining request that includes the authorization name and the tenant identifier of the first tenant, the second tenant can configure, based on the specific permission, the second service to invoke the first service. In this way, in one aspect, transferring of credential information such as password and certificate can be avoided, a risk of cross-account service interaction can be reduced, and highly secure authorization in a cross-service and cross-account scenario can be implemented. In another aspect, efficiency of configuring cross-service and cross-account authorization can be improved, requirements of using service resources in the cross-service and cross-account scenario can be met, flexibility of service resource management can be improved, and service resource utilization can be improved.

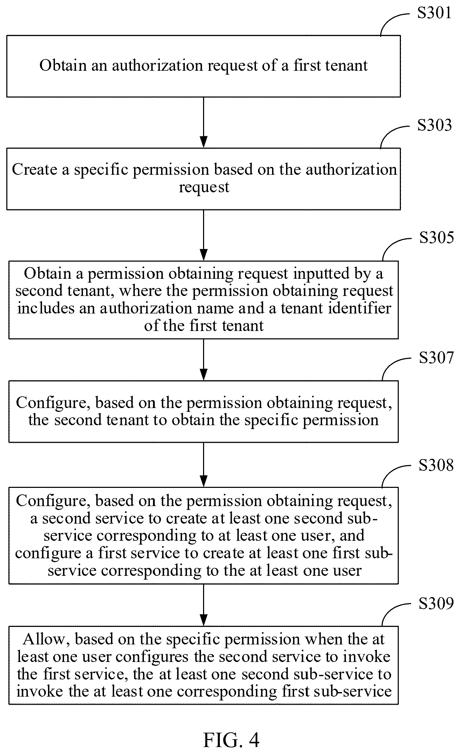

In some possible implementation scenarios, the second tenant includes at least one user. In addition to the foregoing steps, refer to FIG. 4. FIG. 4 is a schematic flowchart of another cross-account resource invoking method based on a cloud computing technology according to an embodiment of this application. The method further includes the following steps.

S308: Configure, based on the permission obtaining request, the second service to create at least one second sub-service corresponding to the at least one user, and configure the first service to create at least one first sub-service corresponding to the at least one user.

When the second tenant includes at least one user, the specific permission can be a permission authorized in a user dimension. Based on the permission obtaining request inputted by the second tenant, the second service is configured to create the at least one second sub-service corresponding to the at least one user included in the second tenant, and the first service is configured to create the at least one first sub-service corresponding to the at least one user. The second sub-service belongs to the second service, and is created within a range of the second service managed by the second tenant. The first sub-service belongs to the first service, and is created within a range of the first service that can be invoked within the specific permission obtained by the second tenant and configured based on the permission obtaining request.

Both the configured first sub-service and the configured second sub-service correspond to the user included in the second tenant. In this way, service invoking configuration in the user dimension can be implemented, a minimum authorization principle is followed, and fine-grained authorization is implemented.

Further, S309: Allow, based on the specific permission when the second tenant configures the second service to invoke the first service, the second service to invoke the first service, specifically including:
allowing, based on the specific permission when the at least one user configures the second service to invoke the first service, the at least one second sub-service to invoke the at least one corresponding first sub-service.

When the user included in the second tenant configures the second service to invoke the first service, the second sub-service corresponding to the user is allowed, based on the specific permission, to invoke the first sub-service corresponding to the user. In this way, the first sub-service corresponding to the user is invoked, and a user included in a same tenant does not invoke, without authorization, a first sub-service corresponding to another user, thereby improving authorization security.

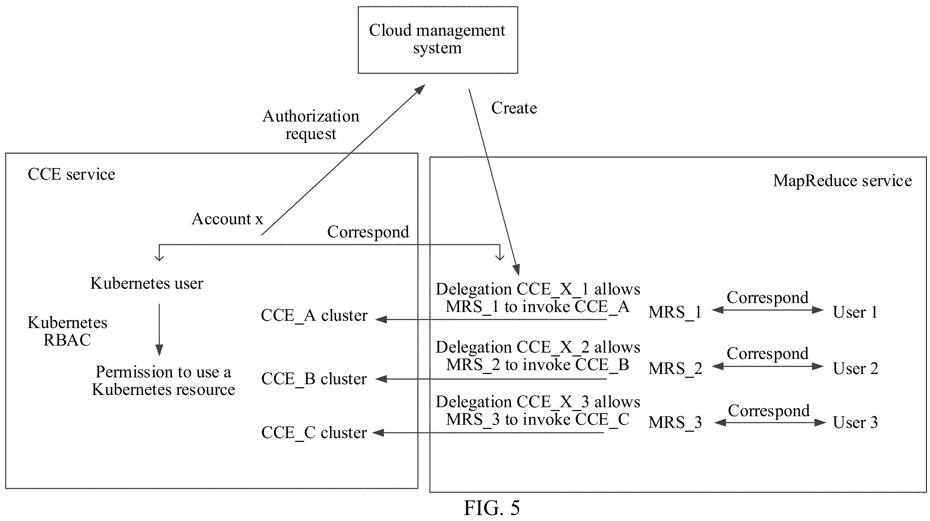

In an example, FIG. 5 is a diagram of a cross-account resource invoking method based on a cloud computing technology according to an embodiment of this application. A first service is a CCE service, and a tenant identifier of a first tenant is an account x. A second service is a MapReduce service, and a tenant identifier of a second tenant is an account y. The second tenant includes a user 1, a user 2, and a user 3.

The first tenant logs in to the account x, and sends an authorization request to a cloud management system. The authorization request includes the tenant identifier of the second tenant, that is, the "account y", an authorization name, that is, a delegation number and a specific permission for the MapReduce service to invoke the CCE service.

In an example, the first tenant separately sends a first authorization request, a second authorization request, and a third authorization request to the cloud management system. The first authorization request includes the account y, CCE_X_1, and a specific permission of the user 1. CCE_X_1 is a delegation number. The second authorization request includes the account y, CCE_X_2, and a specific permission of the user 2. CCE_X_2 is a delegation number. The third authorization request includes the account y, CCE_X_3, and a specific permission of the user 3. CCE_X_3 is a delegation number.

The cloud management system obtains the first authorization request, the second authorization request, and the third authorization request, and creates delegation CCE_X_1, delegation CCE_X_2, and delegation CCE_X_3. The delegation CCE_X_1 includes the specific permission of the user 1. The delegation CCE_X_2 includes the specific permission of the user 2. The delegation CCE_X_3 includes the specific permission of the user 3.

The cloud management system obtains a permission obtaining request inputted by the second tenant, for example, a permission obtaining request inputted by the user 1 and including CCE_X_1 and the account x. The cloud management system configures the user 1 to obtain the specific permission created based on the first authorization request. The cloud management system configures the MapReduce service to create a sub-service corresponding to the user 1, namely, MRS_1, and configures the CCE service to create a sub-service corresponding to the user 1, namely, CCE_A. When the user 1 configures MRS to invoke the CCE service, the cloud management system allows MRS 1 to invoke CCE_A.

In addition, the specific permission included in the first authorization request includes a container resource permission. The container resource permission is a permission created by an administrator of Kubernetes for a container user based on RBAC. In this way, the user 1 can use MRS_1 to invoke CCE_A to create a virtual cluster, and create a namespace in the cluster of CCE_A to run a workload in the CCE cluster.

The cloud management system can further obtain a permission obtaining request inputted by the user 2 and including CCE_X_2 and the account x. The cloud management system configures the user 2 to obtain the specific permission created based on the second authorization request. The cloud management system configures the MapReduce service to create a sub-service corresponding to the user 2, namely, MRS_2, and configures the CCE service to create a sub-service corresponding to the user 2, namely, CCE_B. When the user 2 configures MRS to invoke the CCE service, the cloud management system allows MRS_2 to invoke CCE_B.

The cloud management system can further obtain a permission obtaining request inputted by the user 3 and including CCE_X_3 and the account x. The cloud management system configures the user 3 to obtain the specific permission created based on the third authorization request. The cloud management system configures the MapReduce service to create a sub-service corresponding to user 3, namely, MRS_3, and configures the CCE service to create a sub-service corresponding to user 3, namely, CCE_C. When the user 2 configures MRS to invoke the CCE service, the cloud management system allows MRS_2 to invoke CCE_C.

It should be noted that, in this solution, a manner in which the MapReduce service or the CCE service creates sub-services may be logically distinguishing between the sub-services based on different namespaces in the service, to implement division into the sub-services.

Based on this, when a tenant includes a plurality of users, a sub-service corresponding to a user is created by configuring the first service or the second service, so that when different users are authorized to request to invoke a service, sub-services can be independently invoked, to avoid resource mixing. In this way, security of cross-service invoking by different users is improved, and high availability and high security of resources are ensured.

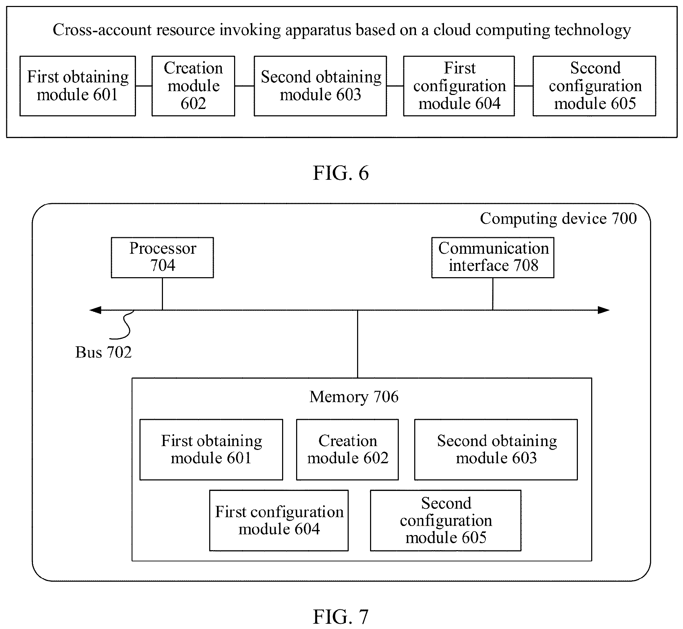

This application further provides a cross-account resource invoking apparatus based on a cloud computing technology. The cross-account resource invoking apparatus based on the cloud computing technology is used in a cloud management system. The cloud management system is configured to manage an infrastructure. A first service of a first tenant and a second service of a second tenant are configured on the infrastructure. As shown in FIG. 6, the apparatus includes:
a first obtaining module 601, configured to obtain an authorization request inputted by the first tenant, where the authorization request includes a tenant identifier of the second tenant, an authorization name, and a specific permission for the second service to invoke the first service;
a creation module 602, configured to create the specific permission based on the authorization request;
a second obtaining module 603, configured to obtain a permission obtaining request inputted by the second tenant, where the permission obtaining request includes the authorization name and a tenant identifier of the first tenant;
a first configuration module 604, configured to configure, based on the permission obtaining request, the second tenant to obtain the specific permission; and
a second configuration module 605, configured to allow, based on the specific permission when the second tenant configures the second service to invoke the first service, the second service to invoke the first service.

In a possible implementation, the second tenant includes at least one user, and the apparatus further includes:
a third configuration module, configured to: configure, based on the permission obtaining request, the second service to create at least one second sub-service corresponding to the at least one user, and configure the first service to create at least one first sub-service corresponding to the at least one user.

The second configuration module is specifically configured to allow, based on the specific permission when the at least one user configures the second service to invoke the first service, the at least one second sub-service to invoke the at least one corresponding first sub-service.

In a possible implementation, the first service is a container service.

In a possible implementation, the specific permission includes a container resource permission, the container resource permission corresponds to a container user, and the container resource permission is a permission to use a container resource.

In a possible implementation, the permission obtaining request includes credential information of the second tenant, and the first configuration module is specifically configured to configure, based on the credential information, the second tenant to perform identity switching to the first tenant, to cause the second tenant to obtain the specific permission.

The first obtaining module 601, the creation module 602, the second obtaining module 603, the first configuration module 604, and the second configuration module 605 may all be implemented by using software, or may be implemented by using hardware. For example, the following uses the first obtaining module 601 as an example to describe an implementation of the first obtaining module 601. Similarly, for implementations of the creation module 602, the second obtaining module 603, the first configuration module 604, and the second configuration module 605, refer to the implementation of the first obtaining module 601.

When a module is used as an example of a software functional unit, the first obtaining module 601 may include code that is run on a computing instance. The computing instance may include at least one of a physical host (a computing device), a virtual machine, and a container. Further, there may be one or more computing instances. For example, the first obtaining module 601 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be set in each VPC for communication between two VPCs in a same region and cross-region communication between VPCs in different regions. The VPCs are interconnected through the communication gateway.

When a module is used as an example of a hardware functional unit, the first obtaining module 601 may include at least one computing device, for example, a server. Alternatively, the first obtaining module 601 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the first obtaining module 601 may be distributed in a same region, or may be distributed in different regions. A plurality of computing devices included in the first obtaining module 601 may be distributed in a same AZ, or may be distributed in different AZs. Similarly, a plurality of computing devices included in the first obtaining module 601 may be distributed on a same VPC, or may be distributed on a plurality of VPCs. The plurality of computing devices may be any combination of computing devices such as the server, the ASIC, the PLD, the CPLD, the FPGA, and the GAL.

It should be noted that, in other embodiments, the first obtaining module 601 may be configured to perform any step in the cross-account resource invoking method based on the cloud computing technology, the creation module 602 may be configured to perform any step in the cross-account resource invoking method based on the cloud computing technology, the second obtaining module 603 may be configured to perform any step in the cross-account resource invoking method based on the cloud computing technology, the first configuration module 604 may be configured to perform any step in the cross-account resource invoking method based on the cloud computing technology, and the second configuration module 605 may be configured to perform any step in the cross-account resource invoking method based on the cloud computing technology. Steps implemented by the first obtaining module 601, the creation module 602, the second obtaining module 603, the first configuration module 604, and the second configuration module 605 may be specified as needed. All functions of the cross-account resource invoking apparatus based on the cloud computing technology are implemented by using the first obtaining module 601, the creation module 602, the second obtaining module 603, the first configuration module 604, and the second configuration module 605 to respectively implement different steps in the cross-account resource invoking method based on the cloud computing technology.

This application further provides a computing device 700. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 702 may include a path for transmitting information between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 706 stores executable program code, and the processor 704 executes the executable program code to separately implement functions of the first obtaining module 601, the creation module 602, the second obtaining module 603, the first configuration module 604, and the second configuration module 605, so as to implement the cross-account resource invoking method based on the cloud computing technology. In other words, the memory 706 stores instructions used to perform the cross-account resource invoking method based on the cloud computing technology.

The communication interface 708 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

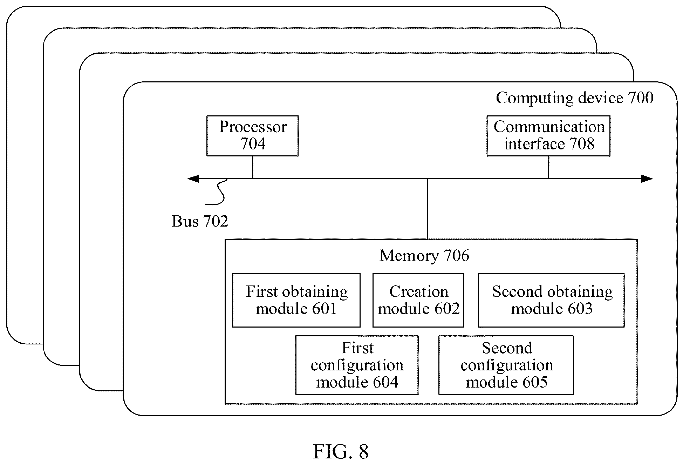

As shown in FIG. 8, the computing device cluster includes at least one computing device 700. A memory 706 in one or more computing devices 700 in the computing device cluster may store same instructions used to perform the cross-account resource invoking method based on the cloud computing technology.

In some possible implementations, the memory 706 in the one or more computing devices 700 in the computing device cluster may alternatively separately store some instructions used to perform the cross-account resource invoking method based on the cloud computing technology. In other words, a combination of the one or more computing devices 700 may jointly execute the instructions used to perform the cross-account resource invoking method based on the cloud computing technology.

It should be noted that memories 706 in different computing devices 700 in the computing device cluster may store different instructions, which are respectively used to perform some functions of the cross-account resource invoking apparatus based on the cloud computing technology. In other words, the instructions stored in the memories 706 in different computing devices 700 may implement functions of one or more of the first obtaining module 601, the creation module 602, the second obtaining module 603, the first configuration module 604, and the second configuration module 605.

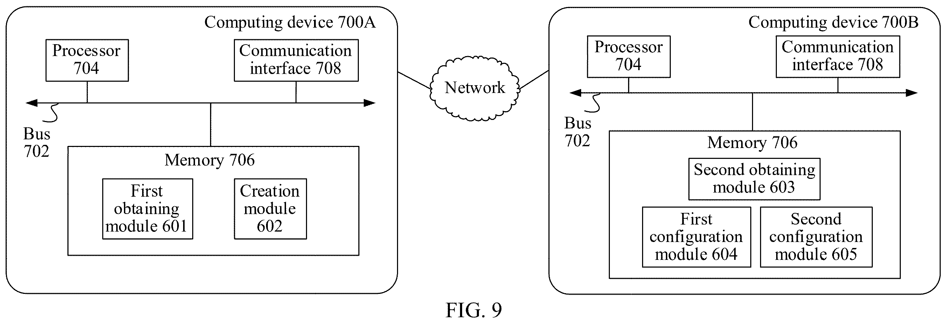

In some possible implementations, the one or more computing devices in the computing device cluster may be connected through a network. The network may be a wide area network, a local area network, or the like. FIG. 9 shows a possible implementation. As shown in FIG. 9, two computing devices 700A and 700B are connected through a network. Specifically, each computing device is connected to the network through a communication interface in the computing device. In this possible implementation, a memory 706 in the computing device 700A stores instructions for executing functions of the first obtaining module 601 and the creation module 602. In addition, a memory 706 in the computing device 700B stores instructions for executing functions of the second obtaining module 603, the first configuration module 604, and the second configuration module 605.

A connection manner between computing device clusters shown in FIG. 9 may be considered based on a requirement of the cross-account resource invoking method based on the cloud computing technology provided in this application. Therefore, functions implemented by the second obtaining module 603, the first configuration module 604, and the second configuration module 605 are considered to be executed by the computing device 700B.

It should be understood that functions of the computing device 700A shown in FIG. 9 may alternatively be completed by a plurality of computing devices 700. Similarly, functions of the computing device 700B may alternatively be completed by the plurality of computing devices 700.

An embodiment of this application further provides a computer program product including instructions. The computer program product may be software or a program product that includes the instructions and that can be run on a computing device or stored in any usable medium. When the computer program product is run on at least one computing device, the at least one computing device is enabled to perform the cross-account resource invoking method based on the cloud computing technology.

An embodiment of this application further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the cross-account resource invoking method based on the cloud computing technology.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions of embodiments of the present invention.

## Claims

1. A cross-account resource invoking method based on a cloud computing technology, wherein the method is applied to a cloud management system, the cloud management system is configured to manage an infrastructure, a first service of a first tenant and a second service of a second tenant are configured on the infrastructure, and the method comprises:
obtaining an authorization request inputted by the first tenant, wherein the authorization request comprises a tenant identifier of the second tenant, an authorization name, and a specific permission for the second service to invoke the first service;
creating the specific permission based on the authorization request;
obtaining a permission obtaining request inputted by the second tenant, wherein the permission obtaining request comprises the authorization name and a tenant identifier of the first tenant;
configuring, based on the permission obtaining request, the second tenant to obtain the specific permission; and
allowing, based on the specific permission when the second tenant configures the second service to invoke the first service, the second service to invoke the first service.

2. The method according to claim 1, wherein the second tenant comprises at least one user, and the method further comprises:
configuring, based on the permission obtaining request, the second service to create at least one second sub-service corresponding to the at least one user, and configuring the first service to create at least one first sub-service corresponding to the at least one user; and
the allowing, based on the specific permission when the second tenant configures the second service to invoke the first service, the second service to invoke the first service comprises:
allowing, based on the specific permission when the at least one user configures the second service to invoke the first service, the at least one second sub-service to invoke the at least one corresponding first sub-service.

3. The method according to claim 1 or 2, wherein the first service is a container service.

4. The method according to claim 3, wherein the specific permission comprises a container resource permission, the container resource permission corresponds to a container user, and the container resource permission is a permission to use a container resource.

5. The method according to any one of claims 1 to 4, wherein the permission obtaining request comprises credential information of the second tenant, and the configuring, based on the permission obtaining request, the second tenant to obtain the specific permission comprises: configuring, based on the credential information, the second tenant to perform identity switching to the first tenant, to cause the second tenant to obtain the specific permission.

6. A cross-account resource invoking apparatus based on a cloud computing technology, wherein the apparatus is used in a cloud management system, the cloud management system is configured to manage an infrastructure, a first service of a first tenant and a second service of a second tenant are configured on the infrastructure, and the apparatus comprises:
a first obtaining module, configured to obtain an authorization request inputted by the first tenant, wherein the authorization request comprises a tenant identifier of the second tenant, an authorization name, and a specific permission for the second service to invoke the first service;
a creation module, configured to create the specific permission based on the authorization request;
a second obtaining module, configured to obtain a permission obtaining request inputted by the second tenant, wherein the permission obtaining request comprises the authorization name and a tenant identifier of the first tenant;
a first configuration module, configured to configure, based on the permission obtaining request, the second tenant to obtain the specific permission; and
a second configuration module, configured to allow, based on the specific permission when the second tenant configures the second service to invoke the first service, the second service to invoke the first service.

7. The apparatus according to claim 6, wherein the second tenant comprises at least one user, and the apparatus further comprises:
a third configuration module, configured to: configure, based on the permission obtaining request, the second service to create at least one second sub-service corresponding to the at least one user, and configure the first service to create at least one first sub-service corresponding to the at least one user, wherein
the second configuration module is specifically configured to allow, based on the specific permission when the at least one user configures the second service to invoke the first service, the at least one second sub-service to invoke the at least one corresponding first sub-service.

8. The apparatus according to claim 6 or 7, wherein the first service is a container service.

9. The apparatus according to claim 8, wherein the specific permission comprises a container resource permission, the container resource permission corresponds to a container user, and the container resource permission is a permission to use a container resource.

10. The apparatus according to any one of claims 6 to 9, wherein the permission obtaining request comprises credential information of the second tenant, and the first configuration module is specifically configured to configure, based on the credential information, the second tenant to perform identity switching to the first tenant, to cause the second tenant to obtain the specific permission.

11. A computing device cluster, comprising at least one computing device, wherein each computing device comprises a processor and a memory; and
a processor in the at least one computing device is configured to execute instructions stored in a memory in the at least one computing device, to enable the computing device cluster to perform the method according to any one of claims 1 to 5.

12. A computer program product comprising instructions, wherein when the instructions are run by a computing device cluster, the computing device cluster is enabled to perform the method according to any one of claims 1 to 5.

13. A computer-readable storage medium, comprising computer program instructions, wherein when the computer program instructions are executed by a computing device cluster, the computing device cluster performs the method according to any one of claims 1 to 5.
